# EUROPEAN PATENT SPECIFICATION

(11) **EP 0 416 462 B1**
(45) Date of publication and mention of the grant of the patent: **25.05.1994**
(21) Application number: 90116633.0
(22) Date of filing: 30.08.1990
(51) Int. Cl.: H02J 4/00, H04B 7/005, H04B 7/204

(54) **Power management system for a worldwide multiple satellite communications system**
Leistungssteuersystem für ein weltweites, mit mehreren Satelliten ausgerüstetes Fernmeldesystem
Système de commande de puissance pour un système de télécommunication mondial à satellites multiples

(30) Priority: 05.09.1989 US 402743
(43) Date of publication of application: 13.03.1991
(73) Proprietor: MOTOROLA, INC., Schaumburg, IL 60196 (US)
(72) Inventor: Bertiger, Bary Robert, Scottsdale, Arizona 85260 (US); Peterson, Kenneth Maynard, tempe, Arizona 85283 (US); Leopold, Raymond Joseph, Chandler, Arizona 85224 (US)
(74) Representative: Dunlop, Hugh Christopher

(56) References cited:
- EP-A- 0 365 885
- IEEE TRANSACTIONS ON COMMUNICATIONS. vol. COM31, May 1983, NEW YORK US pages 726 - 734; P. BAKKEN ET AL.: 'Adaptive Control of Satellite EIRP to Reduce Outage Caused by Fading'

## Description

### Cross Reference To Related Applications

The present application is related to co-pending EPC Patent Applications Serial #89118458.2.

### Background of the Invention

This invention relates, in general, to power management, and more specifically, to power management for multiple satellite systems.

Satellites are becoming important links for communication between stations at different locations throughout the world, particularly for mobile communication stations. For a satellite system to give worldwide coverage, a network or constellation of satellites having polar orbits is desirable. Such a satellite system requires low orbits to allow connection with low power mobile stations.

Each satellite within such a satellite constellation is comprised of many directional antenna cells. Combined, these cells create an umbrella of coverage by the satellite. As the satellites in the constellation orbit within the constellation toward the poles, the umbrella of coverage of the satellites begin to overlap. The closer to the poles the satellites get, the greater the overlap. Cells from one satellite will overlap cells from another satellite resulting in redundancy of coverage. When such an overlap occurs, cells from a satellite having an area of coverage directly beneath the satellite are easier to operate than cells covering the same area from a satellite at a distant angle from the coverage area.

As the satellites within the constellation orbit the earth, they are frequently shadowed from the sun by the earth. Since the power to operate the satellites is generated by solar panels, storage cells, or batteries, are required to store energy for use during "dark" periods or high power demands. In a worst case scenario, any given satellite within the constellation would be shadowed by the earth for approximately 35% of the satellite's orbit. At best, each satellite will be in full view of the sun throughout the satellite's orbit 30% of the time. Each satellite evolves through an annual cycle having a fairly equal distribution of best/worst cases.

In order to efficiently utilize the power of the overlapping satellites allowing storage for "dark" periods as well as for high power demand periods, a power management system is required.

### Summary of the Invention

Accordingly, it is an object of the present invention to provide a power management system for efficient use of stored satellite power in a satellite constellation system.

The above objects are realized by a power management system for use in a worldwide multiple satellite system wherein satellites comprising the satellite system form an overlapping orbiting constellation, each satellite having a plurality of antenna beams, each beam having a given area of coverage or "cell", the total sum of the cells for each satellite forming a larger coverage for the entire satellite, the satellites each comprising solar cells and batteries wherein the energy within the batteries is generated by the solar cells and must be efficiently managed, the power management system comprising:
first means, such as an earth based control station, for programming each of the satellites of the satellite system to control the transfer of power to each of the plurality of antennas at predetermined times;
said first means communicating with the each of the satellites;
a plurality of second means for varying the power output from the battery of each of the satellites to each of the plurality of antennas depending upon the demand of each of the plurality of antennas; and
one each of said plurality of second means coupled to said battery and to one each of said plurality of antennas. Preferably, each satellite comprises a voltage regulated linear power amplifier to supply only the power needed for the demand within each of the antenna's cells.

The above and other objects, features, and advantages of the present invention will be better understood from the following detailed description of a preferred embodiment of the invention taken in conjunction with the accompanying drawings.

### Brief Description of the Drawing

Figure 1 is a diagram of a portion of a low-altitude orbit satellite constellation system.
Figure 2 is a diagram of the coverage for three satellites in a satellite constellation system showing coverage overlap over the earth's norther regions.
Figure 3 is a schematic diagram of a voltage regulated amplifier circuit for a satellite power management system.

### Detailed Description of the Invention

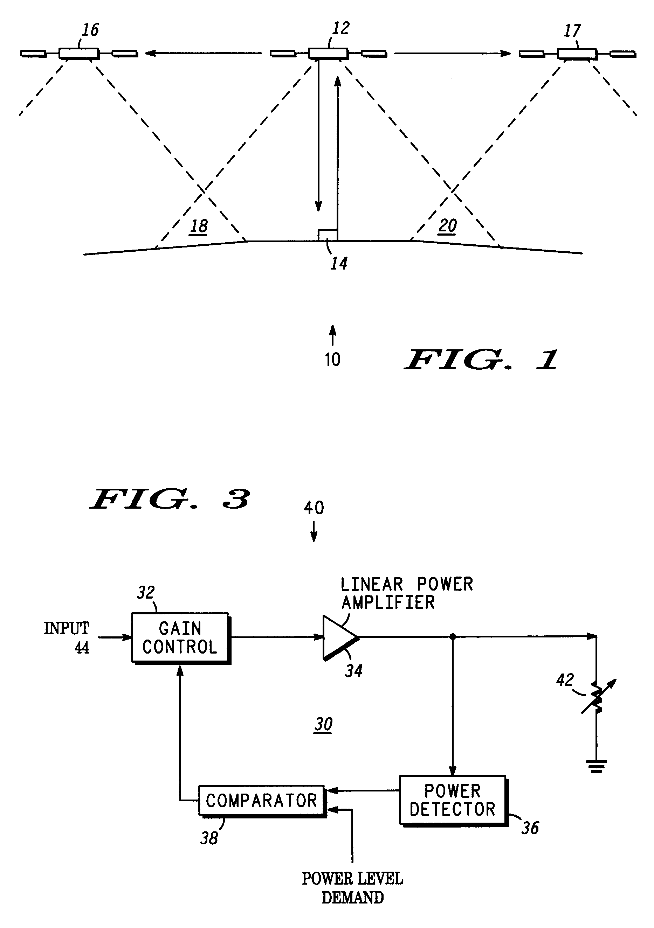

A portion of a low-orbit satellite constellation system 10 is shown in Figure 1. Such a low-orbit satellite system is described in co-pending EPC Patent Application Serial # 89118458.2, which is hereby incorporated by reference. The view of Fig. 1 is taken along the flight path of satellite 12 as satellite 12 passes over base control station 14. Satellite 12 and adjacent satellites 16 and 17, as well as all other satellites in the constellation, have a substantially polar-to-polar orbit. As the satellites orbit the earth latitudinally, the earth is spinning longitudinally beneath the constellation. Because of the two different rotating trajectories, each satellite in the constellation, at some given time throughout the entire constellation system rotational period, will be overhead the base control station 14.

As satellite 12, for example, passes over base control station 14, satellite 12 transmits information down to base control station 14 relating to the health and status of the satellites power system, circuits, and orbit. Base control station 14 transmits a signal to satellite 12 which programs satellite 12 to operate in a designated manner over a time interval of typically one to two week periods of time. Base control station 14 can also send a signal to satellite 12 which is then relayed to other satellites throughout the constellation, such as satellites 16 and 17 in Fig. 1, when an abnormally large need for satellite communication is required in an otherwise low use area, or when an emergency arises. Such a signal will over-ride programming previously received from base control station 14 by the receiving satellite. Although the above description referenced satellite 12, similar operations apply to all the satellites within the constellation.

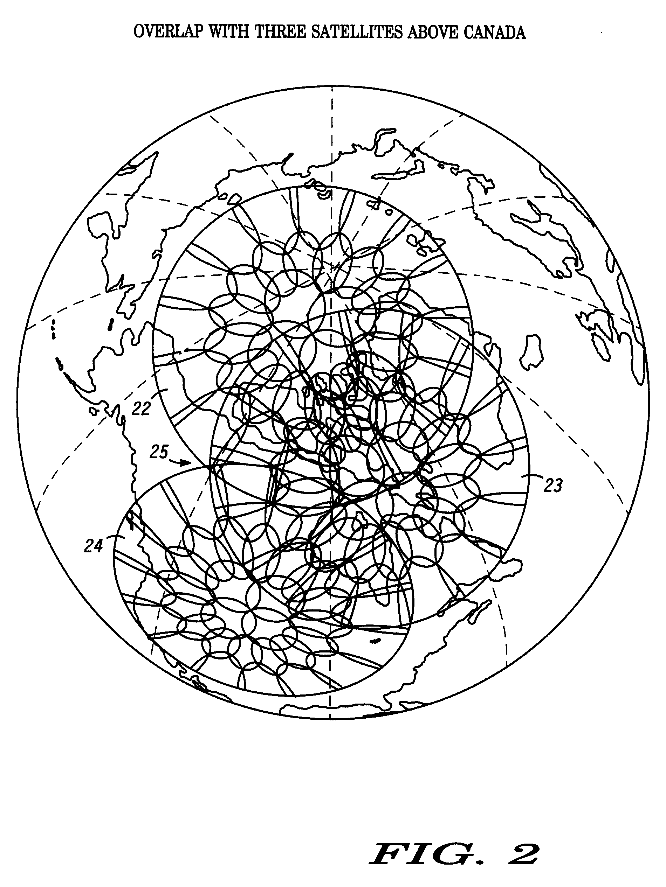

Satellite constellation system 10 has several sets of satellites spaced latitudinally around the earth. Due to the polar orbit of the satellites, as each satellite approaches the respective pole, its area of coverage overlaps the coverage area of other satellites approaching the pole. Figure 2 shows the overlap of three different satellites as they approach the north pole over Canada. The areas of coverage 22, 23, and 24 of three different satellites are shown with their individual cells. As seen, heavy overlap exists in overlap area 25. Specific cells, or coverage areas for individual antenna beams, overlap in certain areas. Since only one cell is needed to cover a given area, the present invention allows two of the three overlapping cells to be turned off. The power to the cell's antenna beam is shut off to save power within the satellite.

The significance of the power savings is appreciated when considering the source of power for the satellite and the satellite's orbit. The satellites in the satellite constellation system are powered by solar panels, and some of the energy generated by the solar panels is stored in batteries. As each satellite orbits around the earth in both a latitudinal and longitudinal direction, it experiences periods of time in which it is not exposed to the rays of the sun. During the "dark" periods, the satellite is required to draw energy from the batteries. Depending upon the orbit of the satellite and the demands of the coverage areas, the satellite can use between 200 watts and 1.2 kilowatts of power. Therefore, as satellites overlap coverage, the cells from satellites having the least available stored power would generally be shut off to preserve power for other non-overlapping cells. The energy may also be preserved for high use areas in the satellite's immediate future orbit. Referring again to Fig. 1, assuming satellites 16 and 17 had less energy stored in their batteries than satellite 12, those cells of satellites 16 covering overlap areas 18 and 20 would be shut down. Only the cells of satellite 20 would continue to operate in overlap areas 18 and 20. The commands requiring satellites 16 to shut down are either transmitted to satellites 16 as they pass over base control station 14, or through satellite 12 in cases of exigency. It should be noted that, depending on each satellite's orbit and demand areas, the cell from the satellite having the least energy stored may not necessarily be shut down. Such a determination is made by base control station 14, and either communicated directly to satellite 16, or relayed through the other satellites of the constellation.

Figure 3 shows an additional power control measure of the present invention. Specifically, each satellite in satellite constellation system 10 comprises a demand regulated feed-back circuit 30. By controlling the amount of power used by the satellite through feed-back circuit 30, each satellite can preserve power for periods of use during "dark" periods, or subsequent demand areas.

Feed-back circuit 30 comprises gain control 32, linear power amplifier 34, power detect 36, and comparator 38. Additionally, a power level demand signal 40 is received from a microprocessor on board the satellite. Feed-back circuit 30 is output to a variable load 42, and is also coupled to the batteries of the satellite (not shown) such that gain control 32 receives an input 44 from the batteries.

As the load of variable load 42 increases, a voltage at the output of linear power amplifier 34 decreases. This decrease is detected by power detect 36 which relays the voltage to comparator 38. Comparator 38 compares the voltage level from voltage detect with a minimum threshold received from power level demand 40. If the threshold has been surpassed, comparator 38 transmits a signal to gain control 32 to increase the current supplied to linear power amplifier 34. Similarly, if the load of variable load 42 decreases, the voltage at linear power amplifier 34 increases, which, when surpassing a maximum threshold, decreases the current supplied from gain control 32.

Thus there has been provided, in accordance with the present invention, a power management system for a worldwide multiple satellite satellite system that fully satisfies the objects, aims, and advantages set forth above. While the invention has been described in conjunction with specific embodiments thereof, it is evident that many alternatives, modifications, and variations will be apparent to those skilled in the art in light of the foregoing description. Accordingly, it is intended to embrace all such alternatives, modifications, and variations as fall within the spirit and broad scope of the appended claims.

## Claims

1. A power management system for use in a worldwide multiple satellite system wherein satellites comprising the satellite system form an overlapping orbiting constellation, each satellite having a plurality of antenna beams, each beam having a given area of coverage or "cell", the total sum of the cells for each satellite forming a larger coverage for the entire satellite, the satellites each comprising solar cells and batteries wherein the energy within the batteries is generated by the solar cells and must be efficiently managed, the power management system comprising:
first means (14) for programming each of the satellites of the satellite system to control the transfer of power to each of the plurality of antennas at predetermined times;
said first means communicating with the each of the satellites;
a plurality of second means (30) for varying the power output from the battery of each of the satellites to each of the plurality of antennas depending upon the demand of each of the plurality of antennas; and
one each of said plurality of second means coupled to said battery and to one each of said plurality of antennas.

2. A power management system according to claim 1 wherein each of said plurality of second means comprises a demand regulated linear power amplifier (32,34,36,38).

3. A power management system according to claim 1 wherein said first means comprises an earth-based control station (14).

4. A power management system according to claim 1 wherein said first means comprises a plurality of earth-based control stations (14) distributed among multiple internetted geographic locations.

5. A method for efficiently managing the power of a worldwide low substantially polar orbit satellite constellation system to avoid redundancy of coverage when more than one satellite within the system covers the same area, and to ensure sufficient stored energy within the satellite for all periods of the satellite's operation time, each satellite having a plurality of antennas, each antenna having a given area of coverage or "cell", the total sum of the cells for each satellite forming a larger coverage for the entire satellite, the satellites each comprising solar cells and a battery wherein the energy within the battery is generated by the solar cells and must be efficiently managed, the method comprising the steps of:
programming from a control station each of the satellites to supply power to its antennas at predetermined times to avoid overlap of coverage between satellites; and
controlling the power from the battery to each of the antennas of each of the satellites with a voltage regulated power amplifier.

6. A method for efficiently managing the power of a worldwide low substantially polar orbit satellite constellation system according to claim 5 wherein said step of programming from a control station comprises programming each of the satellites from an earth based control station.

## Patentansprüche

1. Ein Leistungssteuersystem zur Verwendung in einem weltweiten System mehrerer Satelliten, in dem Satelliten, die das Satellitensystem umfassen, eine überlappende Umlaufkonstellation bilden, wobei jeder Satellit eine Mehrzahl von Antennenkeulen hat, jede Antennenkeule einen gegebenen Überdeckungsbereich oder "Zelle" hat, die Gesamtsumme der Zellen für jeden Satelliten eine größere Überdeckung für den ganzen Satelliten bildet, die Satelliten jeweils Solarzellen und Batterien umfassen, wobei die Energie in den Batterien durch die Solarzellen erzeugt wird und wirksam gesteuert werden muß, wobei das Leistungssteuersystem umfaßt:
eine erste Einrichtung (14), um jeden der Satelliten des Satellitensystem zu programmieren, um die Leistungsübertragung zu jeder der Mehrzahl von Antennen zu vorbestimmten Zeiten zu steuern;
wobei die genannte erste Einrichtung mit jedem der Satelliten in Verbindung steht;
eine Mehrzahl zweiter Einrichtungen (30) zum Ändern der Leistungsausgabe von der Batterie eines jeden der Satelliten zu jeder der Mehrzahl von Antennen in Abhängigkeit von der Anforderung von jeder der Mehrzahl von Antennen; und
wobei jeweils eine der genannten Mehrzahl von zweiten Einrichtungen mit der genannten Batterie und jeweils einer der genannten Mehrzahl von Antennen gekoppelt ist.

2. Ein Leistungssteuersystem gemäß Anspruch 1, in dem jede der genannten Mehrzahl von zweiten Einrichtungen einen anforderungsgeregelten, linearen Leistungsverstärker (32, 34, 36, 38) umfaßt.

3. Ein Leistungssteuersystem gemäß Anspruch 1, in dem die erste Einrichtung eine erdgebundene Kontrollstation (14) umfaßt.

4. Leistungssteuersystem gemäß Anspruch 1, in dem die genannte erste Einrichtung eine Mehrzahl von bodengebundenen Kontrollstationen (14) umfaßt, die auf mehrere, vernetzte, geographische Orte verteilt sind.

5. Ein Verfahren zum wirksamen Steuern der Leistung eines weltweiten Satellitenkonstellationssystems mit niederem im wesentlichen polaren Umlauf, um eine Redundanz der Überdeckung zu vermeiden, wenn mehr als ein Satellit in dem System denselben Bereich überdeckt, und um eine ausreichend gespeicherte Energie in dem Satelliten für alle Perioden der Betriebszeit des Satelliten sicherzustellen, wobei jeder Satellit eine Mehrzahl Antennen aufweist, jede Antenne einen gegebenen Überdeckungsbereich oder "Zelle" hat, die Gesamtsumme der Zellen für jeden Satelliten einen größeren Überdeckungsbereich für den gesamten Satelliten bildet, jeder der Satelliten Solarzellen und eine Batterie umfaßt, wobei die Energie in der Batterie durch die Solarzellen erzeugt wird und wirksam gesteuert werden muß, wobei das Verfahren die Schritte umfaßt:
Programmieren eines jeden der Satelliten von einer Kontrollstation aus, um Leistung seinen Antennen zu vorbestimmten Zeiten zuzuführen, um eine Überdeckungsüberlappung zwischen Satelliten zu vermeiden; und
Steuern der Leistung von der Batterie zu jeder der Antennen von jedem der Satelliten mit einem spannungsgeregelten Leistungsverstärker.

6. Ein Verfahren zum wirksamen Steuern der Leistung eines weltweiten Satellitenkonstellationssystem mit niederem, im wesentlichen niederen, polaren Umläufen gemäß Anspruch 5, bei dem der genannte Schritt des Programmierens von einer Kontrollstation aus das Programmieren von jedem der Satelliten von einer erdgebundenen Kontrollstation aus umfaßt.

## Revendications

1. Système de gestion d'énergie pour utilisation dans un système mondial à satellites multiples dans lequel des satellites constituant le système de satellites forment une constellation orbitant avec chevauchement, chaque satellite possédant une pluralité de faisceaux d'antenne, chaque faisceau ayant une zone de couverture, ou "cellule", donnée la somme totale des cellules de chaque satellite formant une couverture plus grande pour l'ensemble du satellite, les satellites comprenant chacun des cellules solaires et des batteries ; dans lequel l'énergie des batteries est produite par les cellules solaires et doit être gérée efficacement, le système de gestion d'énergie comprenant :
un premier moyen (14), comme une station de commande basée à Terre, pour programmer chacun des satellites du système de satellites pour commander le transfert d'énergie vers chacune de la pluralité des antennes à des instants prédéterminés ;
ledit premier moyen communiquant avec chacun des satellites ;
une pluralité de seconds moyens (30) pour modifier la sortie d'énergie de la batterie de chacun des satellites vers chacune de la pluralité d'antennes en fonction de la demande de chacune de la pluralité d'antennes ; et,
chacun de ladite pluralité de seconds moyens étant couplé à ladite batterie et à chacune de ladite pluralité d'antennes.

2. Système de gestion d'énergie selon la revendication 1, dans lequel chacun de ladite pluralité de seconds moyens comprend un amplificateur de puissance linéaire régulé par la demande (32, 34, 36, 38).

3. Système de gestion d'énergie selon la revendication 1, dans lequel ledit premier moyen comprend une station de commande basée à Terre (14).

4. Système de gestion d'énergie selon la revendication 1, dans lequel ledit premier moyen comprend une pluralité de stations de commande basées à Terre (14) réparties dans des emplacements géographiques multiples maillés.

5. Procédé pour gérer efficacement l'énergie d'un système mondial de constellation de satellites à orbite basse sensiblement polaire pour éviter la redondance de couverture lorsque plus d'un satellite à l'intérieur du système couvre la même zone, et pour assurer une énergie emmagasinée suffisante à l'intérieur du satellite pour toutes les périodes de temps de fonctionnement du satellite, chaque satellite comportant une pluralité d'antennes, chaque antenne ayant une zone de couverture, ou "cellule", donnée, la somme totale des cellules pour chaque satellite formant une couverture plus grande pour l'ensemble du satellite, les satellites comprenant chacun des cellules solaires et une batterie ; dans lequel l'énergie à l'intérieur de la batterie est produite par les cellules solaires et doit être gérée efficacement, le procédé comprenant les étapes :
de programmation, à partir d'une station de commande, de chacun des satellites pour délivrer de l'énergie vers ces antennes à des instants prédéterminés pour éviter le chevauchement de couverture entre les satellites ; et,
de commande de l'énergie issue de la batterie vers chacune des antennes de chacun des satellites à l'aide d'un amplificateur de puissance régulé en tension.

6. Procédé pour gérer efficacement l'énergie d'un système mondial de constellation de satellites à orbite basse sensiblement polaire selon la revendication 5, dans lequel ladite étape de programmation à partir d'une station de commande comprend la programmation de chacun des satellites à partir d'une station de commande basée à Terre.
